# EUROPEAN PATENT APPLICATION

(11) **EP 1 815 753 A1**
(43) Date of publication of application: **08.08.2007**
(21) Application number: 06425065.7
(22) Date of filing: 07.02.2006
(51) Int. Cl.: A23L 1/164, A23L 1/217, A23L 1/212

(54) **A method for preparing an intermediate food product on potatoes and/or cereals and/or legumes and derivatives thereof for the production of snacks**

(71) Applicant: Le Caselle S.r.l., 25026 Pontevico BS (IT)
(72) Inventor: Prestini, Pierangelo, 25020 San Gervasio (Brescia) (IT)
(74) Representative: Long, Giorgio

(57) **Abstract**

The present invention relates to a method for the industrial preparation of an intermediate food product based on potatoes, cereals, and/or legumes and derivatives thereof for the production of foods such as pasta and snacks. Particularly, the invention relates to an industrial method that allows processing a food dough such that, after it has been shaped and suitably expanded by means of frying or other conventional systems, it exhibits optimum organoleptic characteristics and a homemade appearance.

## Description

### FIELD OF THE INVENTION

The present invention relates to a method for the industrial preparation of an intermediate food product based on potatoes, cereals, and/or legumes and derivatives thereof for the production of foods such as pasta and snacks. Particularly, the invention relates to an industrial method that allows processing a dough such that, after it has been shaped and suitably expanded by means of frying or other conventional systems, it exhibits optimum organoleptic characteristics and a home-made appearance.

### BACKGROUND OF THE INVENTION

It is well known that one of the industrial methods for producing extruded snacks quite resembling French fries is the one passing through intermediate products called pellets. The sequence of steps starts by forming a dough, extruding a sheet, optionally perforating the same, cut the desired shapes by means of rotary cutting, until the obtained product is dried, which is an intermediate called "pellet" that has characteristics of long shelf life similar to those of dry pasta.

Typically, intermediate food products or pellets for snacks require two main steps for producing a finished snack. In a first step, starchy ingredients are hydrated for creating a mixture which is then extruded thereby producing one ore more sheets. Upon extrusion, these ingredients are at least partially jellified such that the sheet is given an elastic and strong consistency. The sheets generally exit from the extruder with a moisture content ranging from 20% to 40% relative to the total weight and are cut in portions (pellets) defined by means of a conventional rotary cutting equipment. Subsequently, the portions are dried up to a final moisture content ranging from about 10% to about 14%.

Finally, the pellets can be either preserved until they have to be expanded or can be immediately subjected to expansion for example by being dipped in hot oil or blown with hot air. Typically, the expansion obtained by means of hot oil dipping or with other systems that bring the internal residual moisture to rapid boiling simultaneously completes the cooking of the pellets thereby obtaining a swollen end product that can be flavoured and packaged.

The snacks produced according to said method exhibit aesthetical characteristics that are limited in shape, colour and texture (i.e. palate consistency) due to the industrial manufacture processes. Actually, the regularization and standardization imposed by the industrialization processes are not always appreciated by consumers. Whereby, the evocation of industrial derivation processes is not very appealing to the public, who, on the contrary, tends more and more to appreciate products with home-made, irregular appearance, similar to hand-made products.

Furthermore, the organoleptic characteristics, mainly the crispness are also limited by the regular and well defined type of texture, again, imposed by industrial production.

The technical problem at the heart of the present invention is thus to provide a method for the industrial processing of an intermediate food product for producing snacks or pasta provided with improved, more appealing aesthetic and organoleptic characteristics.

This problem is solved by a method for the industrial processing of an intermediate food product comprising at least one step allowing the finished baked product to be given a rustic and irregular appearance, such as mentioned in the annexed independent claim.

Therefore, the object of the present invention is to provide a method for processing a food sheet.

Further characteristics and the advantages of the present invention will be better understood from the description below of several embodiments thereof, which are given as non-limiting examples with reference to the figures in which:
- Fig. 1A is a plan view of a pellet obtained with the inventive method;
- Fig. 1B is a plan view of a chip obtained after the pellet from Fig. 1A has expanded;
- Fig. 2A is a plan view of a pellet obtained in accordance with a variant embodiment of the inventive method;
- Fig. 2B is a plan view of a chip obtained after the pellet from Fig. 2A has expanded;
- Fig. 3A is a plan view of a pellet obtained in accordance with a further variant embodiment of the inventive method;
- Fig. 3B is a plan view of a chip obtained after the pellet from Fig. 3A has expanded;
- Fig. 4 is a schematic view of a plant for processing an intermediate food product for producing snacks according to the invention.

The concept at the heart of the present invention is to provide a semi-processed product for food products which, once expanded, allows obtaining a palatable food product provided with improved organoleptic characteristics such as crispness. For example, to make a snack more attractive, the concept is to process the sheet such that the pellets obtained therefrom, after they have been expanded, have an irregular aspect, typical of hand-made products.

To obtain a final product provided with said characteristics, a method has been developed for processing a food sheet based on potatoes, cereals and/or legumes and derivatives thereof which sequentially comprises the following steps:
- providing at least two food sheets based on potatoes, cereals and/or legumes and derivatives thereof;
- separately punching each of said sheets;
- overlapping said sheets;
- laminating said overlapped sheets such that an individual sheet is obtained, the surface thereof being covered with punchings.

Particularly, the first step is the preparation of two food sheets starting from a dough comprising a base of potato and/or cereals and/or legumes such as potato flakes, potato granules, wheat and/or other cereal flour, legume flour, in amounts that can range from 20% to 100% by weight based on the total weight of the dry dough. These ingredients are mixed with starch of various nature, such as potato flour, wheat starch, tapioca in amounts ranging from 0% and 80% by weight based on the weight of the dry dough.

The composition of the dough may also comprise flavouring or colouring vegetables such as tomato or spinach or onion in amounts usually less than 5%, based on the weight of the dry dough, salt in amounts generally ranging from 1% and 3%, again, based on the weight of the dry dough, fibers and/or food proteins, flavouring and colouring spices such as paprika, or curcuma, to balance.

Preferably, the dehydrated potatoes and/or cereal flour and/or legume flour and starches are provided in amounts ranging from 70% to 100% by weight based on the total weight of the dry dough.

The ingredients of the dough are mixed under stirring with an amount of water generally ranging from 10% and 45% by weight/kg of dry dough for the time required to obtain a damp, well hydrated flour which is then extruded in accordance with conventional methods. In any case, the extrusion process has to be such, by time, temperature and friction, that the product is cooked and a homogeneous mixture is obtained in which the starch has to be at least partially jellified. Particularly, the treatment for preparing the dough has to be carried out such that a sheet is obtained, which is sufficiently elastic to be subjected to the formation of holes, either through holes or not, without rupture, as well as lamination without losing the characteristic of the surface depressions formed by the holes. Furthermore, it must not be too much jellified as this would result in the sheet being too thick and lamination processing being difficult. When the preparation of the dough has been completed, the jellifying ratio generally ranges from 40% and 90% as compared with the total percentage of the starting starch.

After the dough has been formed, it is subjected to extrusion. Preferably, it is extruded through a conventional drawplate, two sheets exiting therefrom, each being 1,1 mm to 1,3 mm thick.

Subsequently, the punching step is carried out by each sheet passing through two conventional cylinders, the one being provided with a toothed surface, and the other with a smooth surface. Preferably, the punching step comprises a first step of passing through punching cylinders such that thinning spots are created on the sheets and a second step of stretching the sheets such that the thinning spots are opened to form through holes. Alternatively, punching can be carried out such that through holes are directly obtained in the sheets without the stretching step. Particularly, the stretching step can be carried out for example by passing through a pair of rubber-coated cylinders. Said steps are both fully conventional, so they will not be detailed herein below.

Preferably, punching is carried out by making little cuts aligned on rectilinear fronts orthogonal to the sheet feeding direction. The little cuts can be preferably about 4 mm long. The punching fronts preferably come about 2,5 mm one after the other. The little cuts, in addition to being aligned in the crosswise direction to form fronts, may also be obliquely aligned by about 30° relative to the feeding direction.

The individually and separately punched sheets, which have assumed the appearance of two webs with open or closed holes, are then overlapped to each other and subjected to the lamination step.

Particularly, the step of laminating the overlapped and punched sheets is carried out by causing the sheets to pass through a pair of cylinders having smooth pressing surfaces that are 0,7 mm to 1,2 mm spaced apart from each other. The two cylinders provide pressing both sheets such that an individual sheet is formed, which is 1,4 mm to 1,6 mm thick.

The individual sheet as obtained from lamination is thicker than the individual sheets, which are usually 1,1 mm to 1,3 mm thick, and the surface thereof is however corrugated, as the lamination is advantageously carried out such that the individual sheets are pressed, and thereby sealed, against each other, optionally being caused to interpenetrate without however completely filling the holes, and this is due both to the elasticity of the jellified sheet which, at first, deforms based on the cylinders, but then partially recovers its initial thickness due to the elasticity resulting from jellification, and to the adjustment of the pressing level provided by the two lamination cylinders. For example, the two laminating cylinders are moved towards each other such that their surfaces face each other, preferably providing a nip therebetween ranging from 0,7 mm to 1,2 mm, more preferably about 0,9 mm.

The resulting sheet has a very irregular thickness according to the points where the meshes of the two webs have been either offset or overlapped and through holes may also be left which have not been well closed after pressing where there were two overlapping through holes or when a strong pressing has not been carried out. In any case, the adjustments required to provide different effects are well known by those skilled in the art.

To obtain a different number and a different size for the holes, the sheets can be sealed by means of more or less strong lamination. By changing the nip between the cylinders (the distance between the cylinder outer surfaces) one can either have sheets that are simply glued to each other, or sheets that are flattened to an extent that they interpenetrate with the consequent occlusion of almost the totality of holes. By means of stronger lamination, i.e. by moving the cylinders towards each other, a chip is obtained with an almost totally closed structure, which once expanded is considerably thick and of a strongly irregular, rustic appearance. Particularly, all the snack surface is covered by substantially rounded swellings and depressions that make it resemble a hand-made product, rather than industrially made, such as will be detailed herein below with reference to the figures. Furthermore, the considerable and unsmooth thickness of the sheet allows obtaining a much more crisp solid finished product, and hence more palatable, as compared with the known products of the field.

In accordance with a first variant embodiment of the invention, said lamination step can be carried out by means of a pair of cylinders, the surfaces of which are not smooth but covered with relieves alternating with grooves, or in other words, undulated surfaces.

Preferably, the relieves are continuous and arranged substantially parallel to each other all over the circumference of each cylinder, and such that the relieves of the one cylinder will mate the grooves provided in the other and vice versa. Furthermore, the relieves can be as high as 2 mm - 8 mm, preferably 4 mm high, whereas the pitch between two contiguous relieves can be of the same order as the height, preferably the pitch is 4,5 mm. The geometrical shape of the relieves can be any shape suitable to create an undulated effect on the sheets. For example, the cross-section of the relieves can be triangular with either pointed or bevelled apex. Further shapes can be a truncated cone or semicircle. In addition, the relieves can be zigzag fed along the circumference of the laminating cylinders.

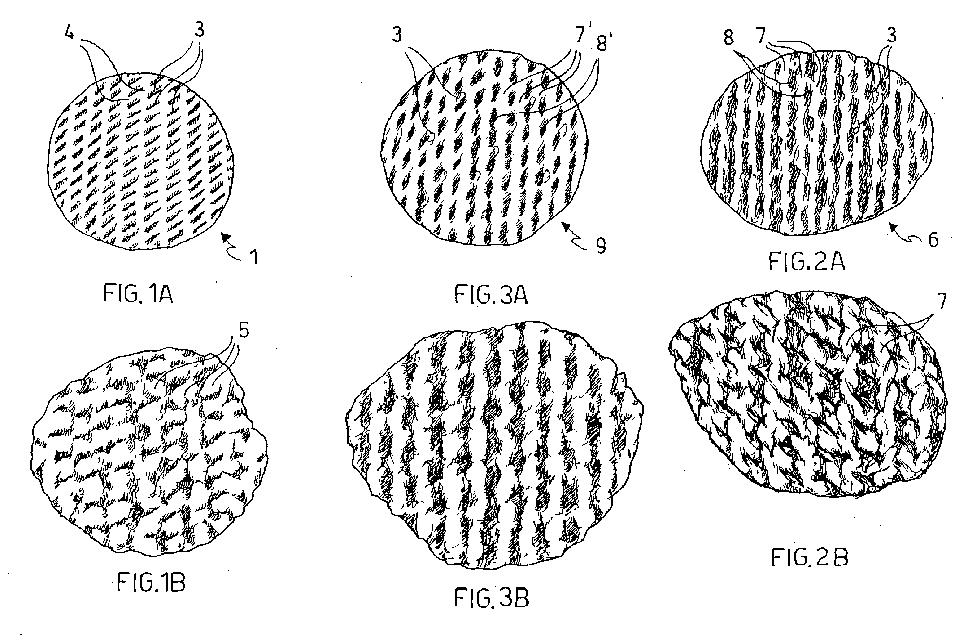

The advantage obtained by using this type of cylinder is that an irregular surface is formed on the pellets, which is provided with parallel ridges with undulated sectional run. Furthermore, as will be better described below with reference to Fig. 3B, this structure will provide the finished product surface with swellings resembling a knitted work. As a consequence, the aesthetic appearance is even more valuable.

In accordance with a further variant embodiment of the invention, the lamination can be carried out by combining a first lamination with said smooth cylinders and a lamination with said undulated cylinders.

This combined two-step lamination allows the two sheets to be better compacted and sealed to each other to obtain an end product with intermediate characteristics relative to the two described above, the lamination being more easily carried out as it is divided in two steps.

In other words, said effect of rounded swellings and the effect of said ridges, as will be explained with reference to Fig. 2B, are less enhanced in the expanded end products than by means of lamination with undulated cylinders only. In fact, the pressing only with the undulated cylinders is carried out in those portions of the sheets that may or may not be involved in the depressions from the previous punching step. As a consequence, the irregularity is the greatest. In contrast, the sheets can be more rolled out if they are also passed under smooth cylinders, even though, as said, not such as to completely flatten said depressions, thereby the sheet surface is made a little smoother.

A snack produced from a pellet prepared with the dough processed in accordance with any variant embodiment described above is however greatly appreciated by the consumer, both as it more similar to hand-made processing rather than industrial processing, and as will be described below, as it is more crispy than those snacks produced with an individual sheet or however with non-laminated sheets due to the high and irregular or very irregular thickness.

The method for processing the intermediate food product further comprises a cutting step in which the sheet after the lamination is cut, shaped and sized as desired. Preferably, the cutting is carried out by means of rotary cutting in accordance with methods and equipment well known in the field.

Finally, the thus formed sheet pieces are subjected to drying until a residual moisture ratio ranging from 10% and 14% is obtained in accordance with conventional methods. The dried pieces are commonly called pellets.

The pellets have to be further subjected to an expansion step by means of hot air blowing or hot oil dipping, i.e. frying, such as stated in the introductory section of this specification. This step allows obtaining an end product, such as a chip, which is provided with a greater thickness than the currently marketed chips as a double sheet is prepared, which is more crispy and mainly provided with a markedly irregular appearance.

The method in accordance with the present invention may also be carried out in order to produce any type of food pasta whereby a dough can be prepared to be processed with conventional forming equipment. For example, pasta such as noodles, lasagne, etc. can be produced. In addition, cereals for breakfast can be produced from a dough prepared with conventional methods and processed in accordance with the inventive method.

With reference to Fig. 1A, with the numeral 1 is designated a pellet for the production of a chip having a general round shape. The pellet surface 2 is covered by punched portions 3 alternating with non-punched portions 4. This pellet is obtained by punching each of the two sheets and then laminating the same with smooth cylinders after they have been overlapped.

Fig. 1B shows the pellet from Fig. 1A after it has been subjected to expansion in hot oil. It should be noted that the surface of the resulting chip is covered by a number of swellings 5 of a general round shape corresponding to the expansion of the non-punched portions 4 of the pellet.

Fig. 2A shows a pellet 6 obtained with a lamination carried out by means of undulated cylinders. In this case, on the pellet surface the longitudinal and parallel ridges 7 are observed alternating with corresponding channels 8. Furthermore, the punched portions 3 are observed as being dipped within the undulated run created by said ridges and channels. Similarly, in Fig. 2B the ridges 7 are observed as parallel irregularly swollen and longitudinal relieves resulting from the expansion treatment, to which the swellings of the non-punched pellet portions are joined. The resulting effect is a highly irregular surface with a pattern resembling a knitted work. In other words, the expanded product surface is similar to a knitted weave pattern.

Fig. 3A is a variant embodiment of the invention in which the pellet 9 derives from a double sheet which is punched and first laminated by means of smooth cylinders and then by means of undulated cylinders. The appearance is similar to the pellet from Fig. 2A, but is different in that the depressions 3 resulting from the punching are attenuated by the first lamination with smooth cylinders. In fact, by this first passage the depth of the depressions tends to be reduced, thereby the latter are less deep. The undulated effect, on the other hand, is unchanged relative to the embodiment described above and represented in Fig. 2A, in which the ridges 7' alternate with channels 8'.

In Fig. 3B, there can be appreciated the effect of this processing after the pellet has been expanded. Here, the above-described knit effect from Fig. 3B is lessened just because the first lamination step is carried out with smooth cylinders that tend to flatten the depressions from the punching.

It should be noted that further variant embodiments of the invention can be carried out by simply varying the operating conditions. For example, pellets can be provided with through holes even after they have been dried such that, once expanded, the through holes are maintained at least partially opened. These variations, however, are within the skills of those skilled in the art.

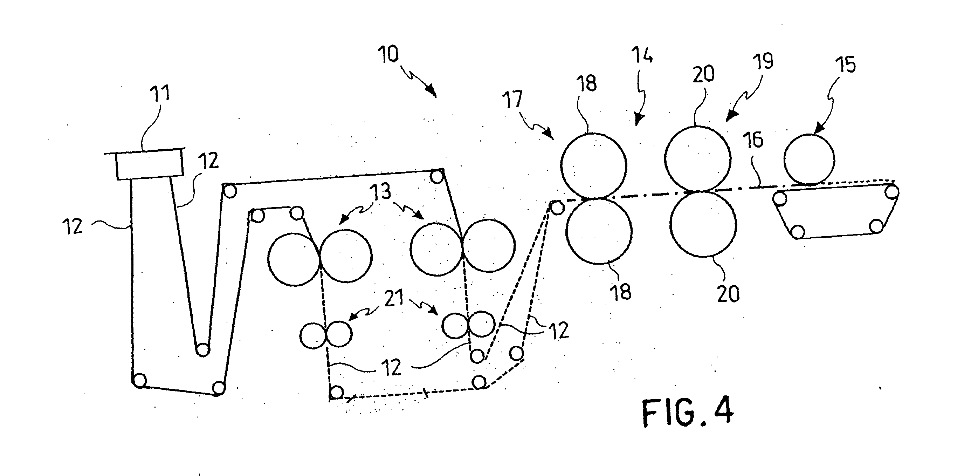

With reference to Fig. 4, the numeral 10 generally designates a plant for working an intermediate food product for producing cooked food.

The plant 10 comprises an equipment 11 for forming at least two sheets 12, an equipment 13 for punching each of said sheets, at least one equipment 14 for laminating the sheets after they have been overlapped and an equipment 15 for cutting the sheet 16 exiting from the at least one laminating equipment 14.

Preferably, the at least one laminating equipment 14 for the sheets 12 comprises a first equipment 17 provided with a pair of cylinders 18 with a substantially smooth lamination surface and/or a second equipment 19 provided with a pair of cylinders 20 with undulated lamination surface. The various products as described above provide the use of either or both pairs of said cylinders.

Particularly, the surface of the cylinders 20 is covered with relieves alternating with grooves. Preferably, the ridges are continuous and arranged substantially parallel to each other all over the circumference of each cylinder, and such that the ridges of the one cylinder will mate the grooves in the other and vice versa. Furthermore, the relieves can be as high as 2 mm - 8 mm, preferably 4 mm high, whereas the pitch between two contiguous relieves can also range from 2 mm and 8 mm, preferably the pitch is 4,5 mm. The geometrical shape of the ridges can be any shape suitable to create an undulated effect on the sheets. For example, the cross-section of the ridges can be triangular with either pointed or bevelled apex. Further shapes can be a truncated cone or a semicircle. In addition, the relieves can be zigzag fed along the circumference of the laminating cylinders.

Preferably, in addition, the plant may also comprise a fully conventional equipment 21 for stretching each sheet 12 after exiting from the punching equipment 13 such that the holes created by punching can be widened/opened, which holes can tend to close due to the elasticity of the sheet. Particularly, this equipment 21 comprises a pair of cylinders for each sheet 12 which are provided with a rubber-coated stretching surface.

The equipment 11 for forming the sheets 12 can be an extruder acting as a cooker and a former, which is coupled with a conventional type of drawplate that is used for forming potato-based or pasta-based sheets. Alternatively, equipment can be arranged in which cooking and forming are carried out by means of two separate extruders and the dough is first fed into the cooker extruder and then into the former extruder to which the drawplate for forming the sheet is coupled.

The punching 13, stretching 21 and cutting 15 equipment is also of a conventional type and will not be detailed further.

An exemplary embodiment of the invention is set forth herein below, which is given by way of an illustrative, non-limiting example of the invention.

### EXAMPLE

Recipe: 30% potato flakes, 30% potato granules, 30% potato flour, 6% modified potato starch, 3% salt, 1% oil.

The ingredient are introduced together with mixing water (about 40%) at the initial part of the extruder mixing tank, where they are forced forward by the reel, move slowly, and are hydrated to the opposite end where they are forced forward by a feeding screw inside the cooker-former extruder. The extruder cooks the product by a heater sleeve and by friction of the product between the latter and the inner screw. The screw pushes the product towards the head from which the product is forced to exit through the drawplate, which forms two sheets being about 50 cm in width and 1,2 mm in thickness. Each of the two sheets is passed through a pair of cylinders that punch the latter until it is almost perforated with little cuts aligned on rectilinear fronts orthogonal to the advancing direction of the sheet. The cuts are about 4 mm long. The punching fronts preferably come about 2,5 mm one after the other. The little cuts, in addition to being aligned in the crosswise direction to form fronts, may also be obliquely aligned by about 30° relative to the feeding direction. Subsequently, each sheet is stretched by a pair of rubber-coated cylinders that cause the holes to be completely opened. Subsequently, the sheets are driven to overlap each other before entering the nip between the smooth cylinders. Here, the sheets are sealed to each other by means of a pair of cylinders with a smooth steel surface, spaced by about 0,9 mm and then passed through the cylinders with a ruled steel surface in which the rulings are 4, 5 mm high and have 4 mm pitch where the ruling and the knit-like weave are enhanced. Finally, the sheet is cut to obtain the round shapes which are sent to the dryer; the scraps are chopped and sent to the mixing tank.
After drying and preferably after 3-4 days of stabilization during which the internal moisture is homogenized, the chips are fried in oil at 185° for about 10 seconds, drained and left to cool.
The product is thus ready to be finally flavoured, if desired, and for packaging.

## Claims

1. A method for the industrial processing of food sheets comprising a base of potato and/or cereals and/or legumes, serially comprising the following steps:
- providing at least two potato-, cereal- and/or legume-based food sheets;
- punching each of said sheets in a separate manner;
- overlapping said sheets;
- laminating said overlapped sheets such that an individual sheet is obtained, the surface thereof being covered by punchings.

2. The method according to claim 1, wherein the lamination is carried out by laminating two sheets each having a thickness ranging between 1,1 mm and 1,3 mm such that an individual sheet is obtained, which is 1,4 mm to 1,6 mm in thickness.

3. The method according to claim 1 or 2, wherein the lamination is carried out by causing the sheets, punched and overlapped to each other, through a pair of cylinders having smooth pressing surfaces.

4. The method according to claim 1 or 2, wherein the lamination is carried out by causing the sheets, punched and overlapped to each other, to pass through a pair of cylinders the pressing surfaces of which are covered by relieves alternating with grooves.

5. The method according to claim 3 or 4, wherein said pair of lamination cylinders is operated with a nip between the cylinder surfaces ranging from 0,7 to 1,2 mm.

6. The method according to claim 4, wherein said relieves are continuous and arranged parallel all along the circumference of each cylinder such that the relieves of the one are mated with the grooves in the other and vice-versa.

7. The method according to claim 4 or 6, wherein said relieves are 2 mm to 8 mm high, preferably the height is 4 mm, and a pitch between two contiguous relieves also ranging from 2 mm to 8 mm, preferably the pitch is 4,5 mm.

8. The method according to any claim 3 to 7, wherein the lamination is carried out by means of a first lamination step with smooth cylinders and a second lamination step with cylinders provided with relieves alternating with grooves.

9. The method according to any claim 1 to 8, wherein the provision of the food sheets comprises preparing a potato- and/or cereal- and/or legume-based dough and then extruding the latter.

10. The method according to claim 9, wherein said dough is prepared by mixing dehydrated potatoes and/or cereal flour and/or legume flour and starches in amount ranging from 70% and 100% by weight based on the total weight of the dry dough.

11. The method according to claim 10, wherein said dough further comprises flavouring or colouring vegetables in amounts less than 5% by weight based on the weight of the dry dough and salt in amounts ranging from 1% and 3% by weight on the weight of the dry dough.

12. The method according to any claim 8 to 11, wherein said dough is subjected to thermal treatment for at least partially jellifying the starch contained within the dough.

13. The method according to any claim 1 to 12, wherein the punching comprises a first step of passing the extruded sheets through a pair of toothed cylinders such that thinning spots are individually created in each sheet and a second step of passing through a pair of stretching cylinders such that said thinning spots are opened to form through holes.

14. The method according to any claim 1 to 13, further comprising a cutting step in which the sheet after lamination is cut and formed in pieces.

15. The method according to claim 14, further comprising a drying step after the step of cutting the sheet pieces.
